# EUROPEAN PATENT APPLICATION

(11) **EP 4 484 393 A1**
(43) Date of publication of application: **01.01.2025**
(21) Application number: 23759593.9
(22) Date of filing: 31.01.2023
(51) Int. Cl.: C03C 17/30, C09D 183/04, C09D 183/07, C09D 183/08, A61J 1/00

(54) **COATING AGENT**

(30) Priority: 25.02.2022 JP 2022027929; 29.07.2022 JP 2022121242
(71) Applicant: Nippon Electric Glass Co., Ltd., Otsu-shi, Shiga 520-8639 (JP)
(72) Inventor: SHIRAGAMI, Toru, Otsu-shi Shiga 520-8639 (JP); ARAI, Satoshi, Otsu-shi Shiga 520-8639 (JP)
(74) Representative: Hoffmann Eitle
(86) International application number: PCT/JP2023/002968
(87) International publication number: WO 2023/162587

(57) **Abstract**

Provided is a coating agent having good water repellency and resistance to a high-pH preparation. A coating agent for forming a coating layer on a glass surface or a resin surface includes an organopolysiloxane compound having organic substituents which are a methyl group and a phenyl group, and an organic substituent which is an acrylic group and/or a vinyl group.

## Description

### TECHNICAL FIELD

The present invention relates to a coating agent having good water repellency and resistance to a high-pH preparation.

### BACKGROUND ART

A pharmaceutical container such as a vial container or an ampule container is required to have high chemical durability in order to stably store a preparation. Therefore, borosilicate glass, which has excellent chemical resistance, is used for the pharmaceutical container.

Before the pharmaceutical container is filled with a preparation, cleaning using a water jet, detergent cleaning, ultrasonic wave cleaning, or the like is performed on the pharmaceutical container. Further, in order to inactivate pyrogen, a dry heat sterilization treatment at about 300°C is performed on the pharmaceutical container. Therefore, it is important that the pharmaceutical container does not cause degeneration, deterioration, peeling, or the like even after the cleaning process or the dry heat sterilization treatment. In particular, it is important that no degeneration, deterioration, peeling, or the like occurs even when the container is filled with preparations having various pH values.

Patent Literature 1 proposes a method of improving water repellency, water resistance, and alkali resistance of a glass container by forming a fluororesin-based coating layer on an inner surface of the container.

Patent Literature 2 proposes a method of improving water repellency of a glass container by forming a fluorine-containing coating layer on an inner surface of the container, and a method of reducing a Si elution amount when an autoclave treatment is performed by filling water.

### CITATION LIST

### PATENT LITERATURE

Patent Literature 1: WO2013/179514
Patent Literature 2: JPH05-132065A

### SUMMARY OF INVENTION

### TECHNICAL PROBLEM

For an injection, it is necessary to reliably administer a predetermined dose to a patient. However, when hydrophilicity of a glass surface is high, liquid may remain on an inner surface of a container, and an appropriate amount of the liquid may not be administered. This is a very serious problem, and in order to solve this problem, at present, a preparation is filled in excess of an appropriate amount in consideration of a residual amount in advance. As a result, the preparation is administered in excess of the appropriate amount, or the cost of the preparation is increased.

In addition, it is known that biopreparations that have been developed in recent years are extremely unstable, and thus are degenerated due to external factors such as temperature fluctuations and vibrations. Therefore, a solution is freeze-dried. However, when hydrophilicity of a glass surface is high, there may be a problem that a solution in a container rises up a container body during a freeze-drying process and becomes cloudy after the freeze-drying, thereby deteriorating visibility and an appearance of the container.

Further, a pH of a preparation is designed to be about pH 6 to pH 8 so as not to sense pain or numbness during administration. However, depending on types of the preparations, some of the preparations exhibit acidity or alkalinity, such as pH 4 or pH 11. Although borosilicate glass has some resistance to an acidic solution, the borosilicate glass is easily attacked by an alkaline solution. Therefore, when a pH of a preparation is increased, there is a risk that a glass component of a container is dissolved to cause degeneration of the preparation.

However, there is a problem that a coating layer at present is not sufficient in water repellency and resistance to a high-pH preparation.

Therefore, an object of the present invention is to provide a coating agent having good water repellency and resistance to a high-pH preparation.

### SOLUTION TO PROBLEM

The inventors conducted various experiments and found that the above technical problems can be solved by coating a base material with a coating layer containing an organopolysiloxane compound, and propose the present invention. Hereinafter, each aspect of a coating agent that solves the above problems will be described.

A coating agent according to Aspect 1 is a coating agent for forming a coating layer on a glass surface or a resin surface, the coating agent containing: an organopolysiloxane compound having organic substituents which are a methyl group and a phenyl group, and an organic substituent which is an acrylic group and/or a vinyl group. The coating layer containing the organopolysiloxane compound having the above organic substituents can maintain good water repellency and can prevent deterioration, peeling, and the like even when in contact with a high-pH preparation for a long period of time.

A coating agent according to Aspect 2 is based on Aspect 1, in which the organopolysiloxane compound preferably further has one or more organic substituents selected from the group consisting of an epoxy group, an ether group, and a polyester group.

A coating agent according to Aspect 3 is based on Aspect 1 or Aspect 2, in which the coating agent preferably contains substantially no halogen component. Here, "contains substantially no halogen component" means that a content of the halogen component in the coating layer is less than 0.8 mass%.

A coating agent according to Aspect 4 is based on any one of Aspect 1 to Aspect 3, in which a content of the organopolysiloxane compound is preferably 0.5 mass% to 40 mass%. Accordingly, it is easy to adjust a viscosity of the coating agent and to make a thickness of the coating layer uniform.

A coating agent according to Aspect 5 is based on any one of Aspect 1 to Aspect 4, in which it is preferable that the organopolysiloxane compound contains dimethyl polysiloxane; phenyl polysiloxane; methyl polysiloxane; and acrylic polysiloxane and/or vinyl polysiloxane, and when dimethyl polysiloxane:phenyl polysiloxane:methyl polysiloxane:acrylic polysiloxane + vinyl polysiloxane = A:B:C:D in a molar ratio, A is 0.8 to 5.0, B is 0.8 to 5.0, C is 1.0 to 5.2, and D is 0.1 to 2.5. Here, "acrylic polysiloxane + vinyl polysiloxane" means a total amount of acrylic polysiloxane and vinyl polysiloxane.

A coating agent according to Aspect 6 is based on any one of Aspect 1 to Aspect 5, in which a refractive index (589 nm) after thermal curing is preferably 1.40 to 1.55. Accordingly, it is possible to reduce a difference in refractive index with the glass surface, and thus light scattering can be prevented, and high transparency can be obtained.

A coating agent according to Aspect 7 is based on any one of Aspect 1 to Aspect 6, which is preferably a coating agent for forming a coating layer on an inner surface of a pharmaceutical container.

### ADVANTAGEOUS EFFECTS OF INVENTION

According to the present invention, it is possible to provide a coating agent having good water repellency and resistance to a high-pH preparation.

### DESCRIPTION OF EMBODIMENTS

Hereinafter, an embodiment of a coating agent will be described. However, the following embodiment is merely an example, and the present invention is not limited to the following embodiment.

### [Coating Agent]

The coating agent according to the present invention is a coating agent for forming a coating layer on a glass surface or a resin surface, and the coating agent contains an organopolysiloxane compound having organic substituents which are a methyl group and a phenyl group, and an organic substituent which is an acrylic group and/or a vinyl group. In addition, the organopolysiloxane compound may also have one or more organic substituents selected from the group consisting of an epoxy group, an ether group, and a polyester group. The coating layer containing the organopolysiloxane compound having the above organic substituents can maintain good water repellency and can prevent deterioration, peeling, and the like even when in contact with a high-pH preparation for a long period of time. In particular, polysiloxane having a methyl group has a high effect of improving water repellency of the coating agent, polysiloxane having a phenyl group has a high effect of improving heat resistance of the coating agent, and polysiloxane having an acrylic group and/or a vinyl group has a high effect of improving alkali resistance of the coating agent.

The organopolysiloxane compound generally contains at least one siloxane structure as shown in the following [Chem. 1] or [Chem. 2]. The siloxane structure is a structure shown below, and may be a composite structure including a single chain, a chain-like structure, and a cage-like structure, and a side chain R represents a hydrogen atom or a hydrocarbon group. The organopolysiloxane compound of the present invention has a structure represented as polysiloxane (SiOR1R2)n (n ≥ 1) having an organic side chain (R ≠ H), and R1 and R2 have organic substituents which are a methyl group and a phenyl group, and an organic substituent which is an acrylic group and/or a vinyl group. In addition, the organopolysiloxane compound may have one or more organic substituents selected from the group consisting of an epoxy group, an ether group, and a polyester group.

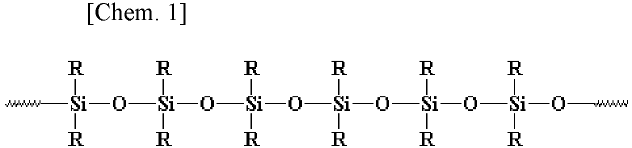

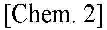

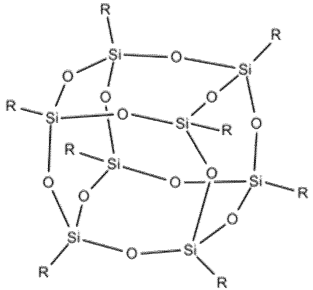

Typical examples of the polysiloxane are shown below.
Methyl polysiloxane: (SiO₂(CH₃))ₙ (n ≥ 1)
Phenyl polysiloxane: (SiO₂(C₆H₅))ₙ (n ≥ 1)
Dimethyl polysiloxane: (SiO(CH₃)₂)ₙ (n ≥ 1)
Acrylic polysiloxane: (SiO₂(CH₂)₃-O-(C=O)-C₃H₅)ₙ (n ≥ 1)
Vinyl polysiloxane (SiO₂(CH₂=CH))ₙ (n ≥ 1)

A content of the organopolysiloxane compound in the coating agent is, in terms of mass%, preferably 0.5% or more, 1% or more, 2% or more, 4% or more, 5% or more, 10% or more, and particularly preferably 12% or more, and is preferably 40% or less, 35% or less, 30% or less, 25% or less, 20% or less, and particularly preferably 15% or less. When the content of the organopolysiloxane compound is too small, the water repellency is deteriorated, and it is difficult to prevent the deterioration, the peeling, and the like of the coating layer. On the other hand, when the content of the organopolysiloxane compound is too large, a viscosity of the coating agent is increased, making it difficult to form a coating layer having a uniform thickness on an inner surface of a container. As a result, cracks and peeling are likely to occur due to residual stress within the coating layer during drying and thermal curing.

The organopolysiloxane compound contained in the coating agent preferably contains dimethyl polysiloxane; phenyl polysiloxane; methyl polysiloxane; and acrylic polysiloxane and/or vinyl polysiloxane. When these components are contained, the water repellency can be improved, and stability against temperature can be improved. When dimethyl polysiloxane:phenyl polysiloxane:methyl polysiloxane:acrylic polysiloxane + vinyl polysiloxane = A:B:C:D in a molar ratio, A is 0.8 to 5.0, B is 0.8 to 5.0, C is 1.0 to 5.2, and D is 0.1 to 2.5, preferably A is 1.2 to 4.0, B is 1.2 to 3.8, C is 1.5 to 4.2, and D is 0.3 to 1.7, more preferably A is 1.8 to 3.5, B is 1.8 to 3.5, C is 2.0 to 3.9, and D is 0.5 to 1.5, and particularly preferably A is 2.0 to 3.2, B is 2.0 to 3.0, C is 2.0 to 3.5, and D is 0.5 to 1.5. When the above molar ratio is out of the above range, it is difficult to sufficiently improve the water repellency and the alkali resistance, and the stability and heat resistance to temperature are impaired. Specifically, when A and C are too small (B and D are too large), the stability and heat resistance to temperature are likely to be impaired. On the other hand, when A and C are too large (B and D are too small), it is difficult to sufficiently improve the water repellency and the alkali resistance.

The coating agent is preferably applied to a content surface of the container in a state of being uniformly mixed with an organic solvent. The organic solvent is not particularly limited, and examples thereof include butyl alcohol, isopropyl alcohol, and isopropyl acetate. These organic solvents may be used in combination of a plurality of types thereof, or may be used alone. A content of the organic solvent in the coating agent is, in terms of mass%, preferably 1 mass% or more, 5 mass% or more, 10 mass% or more, 15 mass% or more, 20 mass% or more, and particularly preferably 25 mass% or more, and is preferably 90 mass% or less, 80 mass% or less, 70 mass% or less, and particularly preferably 60 mass% or less.

The coating agent may contain a surface conditioner for adjusting surface tension. Accordingly, smoothness of the coating layer can be improved after the coating agent is applied to the content surface of the container. A content of the surface conditioner in the coating agent is, in terms of mass%, preferably 0% to 10%, more preferably 0% to 5%, and particularly 0.5% to 1 mass%.

The coating agent preferably contains substantially no halogen component, particularly a fluorine component and a chlorine component. Accordingly, an environmental load can be reduced, and ease of handling can be improved.

### [Method of Applying Coating Agent]

In order to uniformly apply the coating agent, the container is preferably cleaned in advance. A cleaning method is not particularly limited, and removal of dust and the like by air blowing, solvent cleaning with purified water, acetone, or the like, and the like may be performed.

A method of applying the coating agent is not particularly specified, and a dipping method, a spraying method, an electrostatic spraying method, or the like may be used.

### [Formation of Coating Layer]

After the coating agent is applied to the inner surface of the container, the coating agent is preferably dried and thermally cured to form the coating layer. A drying process is a process of volatilizing the organic solvent in the coating agent. A thermal curing process is a process of firmly bonding the coating agent to the inner surface of the container by a dehydration condensation reaction.

A drying temperature in the drying process is preferably 40°C or higher, 45°C or higher, and particularly preferably 50°C or higher, and is preferably 180°C or lower, 170°C or lower, and particularly preferably 150°C or lower. When the drying temperature is too low, the organic solvent is not sufficiently removed from the coating agent, and cloudiness, the peeling, or the like is likely to occur on the coating layer. When the drying temperature is too high, a thermal curing reaction rapidly proceeds, and the cloudiness, the peeling, or the like is likely to occur on the coating layer.

A drying time is preferably 1 minute or more, 5 minutes or more, 10 minutes or more, 15 minutes or more, and particularly preferably 20 minutes or more, and is preferably 60 minutes or less, 40 minutes or less, and particularly preferably 30 minutes or less. When the drying time is too short, the organic solvent is not sufficiently removed from the coating agent, and the cloudiness, the peeling, or the like is likely to occur on the coating layer. When the drying time is too long, productivity of a pharmaceutical container is decreased.

A thermal curing temperature in the thermal curing process is preferably 185°C or higher, 190°C or higher, and particularly preferably 200°C or higher, and is preferably 450°C or lower, 400°C or lower, and particularly preferably 350°C or lower. When the thermal curing temperature is too low, the thermal curing reaction does not sufficiently occur, and it is difficult to improve water repellency of the pharmaceutical container. On the other hand, when the thermal curing temperature is too high, there is a possibility that the coating agent is thermally decomposed to cause defects in the coating layer, and in the worst case, the coating layer may disappear.

A thermal curing time is preferably 5 minutes or more, 10 minutes or more, and particularly preferably 15 minutes or more, and is preferably 100 minutes or less, 60 minutes or less, and particularly preferably 40 minutes or less. When the thermal curing time is too short, the thermal curing reaction does not sufficiently occur, and it is difficult to improve the water repellency of the pharmaceutical container. On the other hand, when the thermal curing time is too long, the productivity of the pharmaceutical container is decreased.

It is preferable that the coating agent has a refractive index of the coating layer close to that of the container. Accordingly, light scattering can be prevented, and high transparency can be obtained. Specifically, the refractive index (589 nm) of the coating layer is 1.40 to 1.55, preferably 1.42 to 1.52, more preferably 1.43 to 1.52, still more preferably 1.44 to 1.50, and particularly preferably 1.45 to 1.49.

A thickness of the coating layer is preferably 10 nm or more, 20 nm or more, 50 nm or more, and 100 nm or more, and is preferably 2500 nm or less, 2000 nm or less, and particularly preferably 1500 nm or less. Accordingly, defects such as pinholes are less likely to occur, and stress generated after the thermal curing is reduced, so that the deterioration, the peeling, and the like of the coating layer can be prevented.

### [Container]

From the viewpoint of chemical resistance, the container is preferably made of glass, particularly silicate glass. The silicate glass preferably contains, in terms of mass%, 65% to 85% of SiO₂, 0% to 15% of Al₂O₃, 0% to 13% (preferably 1% to 13%) of B₂O₃, 0% to 5% of Li₂O, 3% to 15% of Na₂O, 0% to 5% of K₂O, 0% to 5% of BaO, 0% to 15% of CaO, and 0% to 5% of MgO. In addition, it is preferable to contain, in terms of mass%, 65% to 85% of SiO₂, 1% to 15% of Al₂O₃, 0% to 13% (preferably 1% to 13%) of B₂O₃, 3% to 15% of Na₂O, 0% to 5% of K₂O, 0% to 5% of BaO, 0% to 5% of CaO, and 0% to 5% of MgO. The container may be brown in color for ultraviolet ray shielding. That is, 0.001% to 5% of Fe₂O₃ and 0.001% to 5% of TiO₂ may be contained in terms of mass%. In a case of a glass container, a fining agent may contain SnO₂, Sb₂O₃, As₂O₃, CeO₂, F, Cl, sodium sulfate, and the like. A content thereof is not particularly limited, and is preferably 0% or more, 0.001% or more, 0.002% or more, 0.005% or more, and 0.007% or more, and is preferably 2% or less, 1.8% or less, 1.5% or less, 1% or less, 0.8% or less, 0.5% or less, and 0.3% or less in terms of individual content or total content, from the viewpoints of the manufacturing cost and the environmental load. From the viewpoint of processability into a container shape, the container is preferably made of a resin, in particular, a resin such as polypropylene, polyethylene, polyethylene terephthalate, polyvinyl chloride, cycloolefin polymers, cycloolefin copolymers, polymethyl pentene, or polycarbonate.

A linear thermal expansion coefficient of the silicate glass at 30°C to 380°C is preferably 100 × 10⁻⁷ /°C or less, 90 × 10⁻⁷ /°C or less, 80 × 10⁻⁷ /°C or less, 70 × 10⁻⁷ /°C or less, 60 × 10⁻⁷ /°C or less, 50 × 10⁻⁷ /°C or less, and 35 × 10⁻⁷ /°C or more and 45 × 10⁻⁷ /°C or less. When the linear thermal expansion coefficient at 30°C to 380°C is regulated within the above range, a Si elution amount is reduced. The linear thermal expansion coefficient at 30°C to 380°C can be measured by a dilatometer or the like.

On the other hand, when the linear thermal expansion coefficient of the silicate glass at 30°C to 380°C is high, manufacturing efficiency of the pharmaceutical container is high, but on the other hand, the Si elution amount is large, and it is difficult to use the glass as the pharmaceutical container. However, when the coating layer according to the present invention is formed, the glass can be used as the pharmaceutical container even in such a case. That is, when the linear thermal expansion coefficient of the silicate glass at 30°C to 380°C is high, an effect of the present invention can be accurately obtained. In this case, the linear thermal expansion coefficient of the silicate glass at 30°C to 380°C is preferably 25 × 10⁻⁷ /°C or more, 30 × 10⁻⁷ /°C or more, 40 × 10⁻⁷ /°C or more, 50 × 10⁻⁷ /°C or more, 60 × 10⁻⁷ /°C or more, 70 × 10⁻⁷ /°C or more, and 80 × 10⁻⁷ /°C or more, and 100 × 10⁻⁷ /°C or less.

### [Pharmaceutical Container]

Various forms of the container on which the coating layer is formed can be used. For example, the present invention is preferably used in a vial container, an ampule container, a syringe, a cartridge, and the like.

In a pharmaceutical container (outer diameter: 20 mmϕ, wall thickness: 1 mm, volume: 10 mL) with a coating layer formed on a surface using the coating agent according to the present invention, a Si elution amount when a sodium hydroxide aqueous solution adjusted to pH 11 is subjected to a heat treatment at 121°C for 60 minutes in a state of being filled up to 90 volumes is preferably 2 µg/mL or less and 1.8 µg/mL or less. When the Si elution amount is too large, insoluble foreign matter is likely to be generated in a pharmaceutical product.

### Examples

The present invention will be described in detail based on Examples. The following Examples are illustrative, and the present invention is not limited to the following Examples.

### [Sample No. 1]

A coating agent was prepared by mixing and dissolving 30 mass% of an organopolysiloxane compound having a methyl group, a phenyl group, and an acrylic group, 15 mass% of butyl alcohol, 10 mass% of isopropyl acetate, and 45 mass% of isopropyl alcohol. A molar ratio of dimethyl polysiloxane, phenyl polysiloxane, methyl polysiloxane, and acrylic polysiloxane contained in the organopolysiloxane compound was adjusted to 2.9:2.7:2.7:1.

A borosilicate glass tube having an outer diameter of 20 mmϕ and a wall thickness of 1 mm was processed to prepare a vial container having a volume of 10 mL. The vial container was fully filled with the above coating agent, and the vial was inverted to discharge the coating agent, and then the vial was laid down laterally such that a mouth portion of the vial faced outward, and rotated by a centrifugal separator to remove the coating agent remaining in the vial container. The vial coated with the coating agent was dried for 60 minutes in a dryer heated to 60°C. Next, a thermal curing treatment was performed for 30 minutes in a dryer heated to 260°C to 290°C to form a coating layer having an average thickness of 250 nm.

The thickness of the coating layer was measured according to the following procedures. Scratches were made on an outer surface of a container body using a wheel glass cutter (Normal Wheel Type, manufactured by Mitsuboshi Diamond Industrial Co., Ltd.). The scratches were made in a longitudinal direction so as to divide a circumference of the container into six equal parts or eight equal parts from a bottom to a shoulder of the container. Scratches were also made on an outer surface of the bottom of the container in a radial manner so as to divide a bottom surface into six equal parts or eight equal parts. Next, one end of a soda-lime glass rod having a thermal expansion coefficient of about 100 × 10⁻⁷ /°C was roasted and softened by using an oxygen gas burner. The mouth portion was held in an inverted state of the container, and the softened glass rod was pressed against a scratched portion on a side surface of the container and held for several seconds. The glass rod was repeatedly heated and pressed until a crack was developed from the shoulder to the bottom of the container. A crack was developed in another adjacent scratched portion as well. Finally, the heated glass rod was pressed against the bottom of the container to cause cracks to develop in a radial manner. When the cracks were generally developed, the side surface and the bottom surface of the container were tapped, and a side surface portion and a bottom surface portion were taken out. A glass piece taken out was set in a sample holder such that a cross-sectional portion thereof faces upward, and the cross section was observed using a high spatial resolution SEM SU8220 (manufactured by Hitachi High-Tech Corporation) to measure a film thickness of the coating layer.

### [Sample No. 2]

A coating agent was prepared by mixing and dissolving 24 mass% of an organopolysiloxane compound having a methyl group, a phenyl group, and a vinyl group, 15 mass% of butyl alcohol, 10 mass% of isopropyl acetate, and 51 mass% of isopropyl alcohol. A molar ratio of dimethyl polysiloxane, phenyl polysiloxane, methyl polysiloxane, and vinyl polysiloxane contained in the organopolysiloxane compound was adjusted to 2.9:2.6:2.7:1.

A borosilicate glass tube having an outer diameter of 20 mmϕ and a wall thickness of 1 mm was processed to prepare a vial container having a volume of 10 mL. The vial container was fully filled with the above coating agent, and the vial was inverted to discharge the coating agent, and then the vial was laid down laterally such that a mouth portion of the vial faced outward, and rotated by a centrifugal separator to remove the coating agent remaining in the vial container. The vial coated with the coating agent was dried for 10 minutes in a dryer heated to 60°C. Next, a thermal curing treatment was performed for 30 minutes in a dryer heated to 260°C to 290°C to form a coating layer having an average thickness of 300 nm.

### [Sample No. 3]

A coating agent was prepared by mixing and dissolving 30 mass% of an organopolysiloxane compound having a methyl group and a phenyl group, 15 mass% of butyl alcohol, 10 mass% of isopropyl acetate, and 45 mass% of isopropyl alcohol. A molar ratio of dimethyl polysiloxane, phenyl polysiloxane, and methyl polysiloxane contained in the organopolysiloxane compound was adjusted to 2.9:2.7:2.7.

A borosilicate glass tube having an outer diameter of 20 mmϕ and a wall thickness of 1 mm was processed to prepare a vial container having a volume of 10 mL. The vial container was fully filled with the above coating agent, and the vial was inverted to discharge the coating agent, and then the vial was laid down laterally such that a mouth portion of the vial faced outward, and rotated by a centrifugal separator to remove the coating agent remaining in the vial container. The vial coated with the coating agent was dried for 60 minutes in a dryer heated to 60°C. Next, a thermal curing treatment was performed for 30 minutes in a dryer heated to 260°C to 290°C to form a coating layer having an average thickness of 250 nm.

### [Sample No. 4]

A coating agent was prepared by mixing and dissolving 30 mass% of an organopolysiloxane compound having a methyl group, 15 mass% of butyl alcohol, 10 mass% of isopropyl acetate, and 45 mass% of isopropyl alcohol. A molar ratio of dimethyl polysiloxane and methyl polysiloxane contained in the organopolysiloxane compound was adjusted to 2.9:2.7.

A borosilicate glass tube having an outer diameter of 20 mmϕ and a wall thickness of 1 mm was processed to prepare a vial container having a volume of 10 mL. The vial container was fully filled with the above coating agent, and the vial was inverted to discharge the coating agent, and then the vial was laid down laterally such that a mouth portion of the vial faced outward, and rotated by a centrifugal separator to remove the coating agent remaining in the vial container. The vial coated with the coating agent was dried for 60 minutes in a dryer heated to 60°C. Next, a thermal curing treatment was performed for 30 minutes in a dryer heated to 260°C to 290°C to form a coating layer having an average thickness of 250 nm.

Subsequently, an inside and an outside of each of the prepared vial containers (Sample Nos. 1 to 4) were cleaned three times with purified water, and then filled up to 90 volumes with a sodium hydroxide aqueous solution adjusted to pH 11. After that, a rubber stopper and an aluminum cap were placed at the mouth portion of the vial container and subjected to a seaming process, and then an internal liquid was prevented from leaking, and a heat treatment was performed in an autoclave at 121°C for 60 minutes. Si elution amount analysis was performed on these containers.

In the Si elution amount analysis, the rubber stopper and the aluminum cap were removed from the vial container after a heating test, and an eluate in the vial container was collected into a centrifuge tube. Thereafter, an Si concentration in the eluate was analyzed using ICP-OES.

A Si elution amount of Sample No. 1 was 1.31 µg/mL. A Si elution amount of Sample No. 2 was 1.45 µg/mL. A Si elution amount of Sample No. 3 was 2.86 µg/mL. An elution amount of Sample No. 4 was 3.11 µg/mL.

As can be seen from the above, Sample Nos. 1 and 2 had a smaller Si elution amount and had good chemical durability against a high-pH solution as compared with Sample Nos. 3 and 4.

### [Sample No. 5]

The same coating agent as in Sample No. 1 was applied by spin coating onto a glass substrate made of alkali-free aluminosilicate glass (OA-10G manufactured by Nippon Electric Glass Co., Ltd.). The glass substrate coated with the coating agent was dried for 60 minutes in a dryer heated to 60°C. Next, a thermal curing treatment was performed for 60 minutes in a dryer heated to 260°C to 290°C to form a coating layer having an average thickness of 250 nm on a glass surface. A contact angle, a refractive index, and transmittance (wavelength range of 400 nm to 700 nm) of the glass substrate after the thermal curing treatment were measured.

### [Sample No. 6]

The same coating agent as in Sample No. 2 was applied by spin coating onto a glass substrate made of alkali-free aluminosilicate glass (OA-10G manufactured by Nippon Electric Glass Co., Ltd.). The glass substrate coated with the coating agent was dried for 10 minutes in a dryer heated to 60°C. Next, a thermal curing treatment was performed for 60 minutes in a dryer heated to 260°C to 290°C to form a coating layer having an average thickness of 300 nm on a glass surface. A contact angle, a refractive index, and transmittance (wavelength range of 400 nm to 700 nm) of the glass substrate after the thermal curing treatment were measured.

### [Sample No. 7]

A contact angle, a refractive index, and transmittance (wavelength range of 400 nm to 700 nm) were measured using the same glass substrate (OA-10G manufactured by Nippon Electric Glass Co., Ltd.) as in Sample Nos. 5 and 6, without forming a coating layer.

The contact angle was measured using a contact angle measuring device (B100, manufactured by Asumi Giken) and purified water. The refractive index (589 nm) was measured using a spectroscopic ellipsometer. A measurement wavelength is 350 nm to 1700 nm. The transmittance was measured using a spectrophotometer (V-670, manufactured by JASCO Corporation). A measurement wavelength is 200 nm to 800 nm, a sampling pitch is 1 nm, a slit width is 5 nm, and a scanning speed is 200 nm/min.

Sample No. 5 had a contact angle of 97°, Sample No. 6 had a contact angle of 96°, and Sample No. 7 had a contact angle of 30°, so that it was found that Samples Nos. 5 and 6 had good water repellency as compared with Sample No. 7. Sample Nos. 5 and 6 had the same refractive index (1.47) and the same transmittance (91%) as Sample No. 7.

## Claims

1. A coating agent for forming a coating layer on a glass surface or a resin surface, the coating agent comprising:
an organopolysiloxane compound having organic substituents which are a methyl group and a phenyl group, and an organic substituent which is an acrylic group and/or a vinyl group.

2. The coating agent according to claim 1, wherein
the organopolysiloxane compound further has one or more organic substituents selected from the group consisting of an epoxy group, an ether group, and a polyester group.

3. The coating agent according to claim 1 or 2, wherein
the coating agent comprises substantially no halogen component.

4. The coating agent according to claim 1 or 2, wherein
a content of the organopolysiloxane compound is 0.5 mass% to 40 mass%.

5. The coating agent according to claim 1 or 2, wherein
the organopolysiloxane compound contains dimethyl polysiloxane; phenyl polysiloxane; methyl polysiloxane; and acrylic polysiloxane and/or vinyl polysiloxane, and when dimethyl polysiloxane:phenyl polysiloxane:methyl polysiloxane:acrylic polysiloxane + vinyl polysiloxane = A:B:C:D in a molar ratio, A is 0.8 to 5.0, B is 0.8 to 5.0, C is 1.0 to 5.2, and D is 0.1 to 2.5.

6. The coating agent according to claim 1 or 2, wherein
the coating layer has a refractive index (589 nm) of 1.40 to 1.55.

7. The coating agent according to claim 1 or 2, which is a coating agent for forming a coating layer on an inner surface of a pharmaceutical container.
